# EUROPÄISCHE PATENTANMELDUNG

(11) **EP 1 897 855 A2**
(43) Veröffentlichungstag der Anmeldung: **12.03.2008**
(21) Anmeldenummer: 07017545.0
(22) Anmeldetag: 07.09.2007
(51) Int. Cl.: C02F 1/461, C02F 1/68

(54) **Vorrichtung und Verfahren zur Trinkwasseraufbereitung**

(30) Priorität: 08.09.2006 DE 102006042804
(71) Anmelder: Zimmermann, Rolf, 77794 Lautenbach (DE)
(72) Erfinder: Zimmermann, Rolf, 77794 Lautenbach (DE)
(74) Vertreter: Klocke, Peter

(57) **Zusammenfassung**

Gemäß dem Verfahren und der Vorrichtung werden angereicherte Trinkwässer bereitgestellt, in dem mittels einer Elektrolyseeinheit reduziertes ionisiertes basisches Wasser gewonnen wird. Diesem können eine probiotische Flüssigkeit, flüssige Mineralien oder flüssige Spurenelemente sowie gasförmiger und/oder stabilisierter Sauerstoff zugeführt werden, so dass Trinkwässer mit besonderen elektrochemischen Eigenschaften entstehen. Das Verfahren und die Vorrichtungen ermöglichen auf einfache Weise die Bereitstellung biologisch wirksamer Trinkwässer, die es ermöglichen dem Menschen große Mengen an Antiooxidatien zuzuführen sowie die Einstellung des Säurebasengleichgewichts vorzunehmen des Oxidation-Reduktion-Gleichgewichts aufrecht zu erhalten sowie die Reduzierung der Darmfäulnis über Millieu Veränderungen bewirken zu können um die Grundprävension des Menschen im Gleichgewicht zu halten oder wieder ins Gleichgewicht zu bringen.

## Beschreibung

### Gebiet der Erfindung

Die vorliegende Erfindung betrifft eine Vorrichtung zur Trinkwasseraufbereitung und ein Verfahren zum Abfüllen in einem Gefäß.

### Hintergrund der Erfindung

Häufig sind Therapien zur Gesundung des Menschen nicht erfolgreich oder nur teilweise erfolgreich, da die erkrankten Menschen nicht in der Lage sind, die verordneten Nahrungsergänzungsmittel, pflanzlichen Stärkungsmittel oder Arzneimittel richtig zu verstoffwechseln. Wenn der menschliche Organismus nicht in der Lage ist, diese Mittel zu verstoffwechseln, ist es nicht überraschend, dass es bereits Studien gibt, die belegen, dass Nahrungsergänzungsmittel krebserregend sein könnten. Weitere Studien belegen, dass bei Menschen, die sehr viel Fast Food zu sich nehmen und dann quasi als Ausgleich Vitamintabletten schlucken, diese überhaupt nicht verstoffwechseln können. Sie produzieren dabei einen sehr teuren Urin, da sie stark dehydriert sind und ihr Säuren-Basen-Haushalt völlig aus dem Gleichgewicht gekommen ist.

In jüngster Zeit wurde daher ein einfaches und wenig aufwendiges Diagnoseverfahren entwickelt, bei dem lediglich durch eine Urinanalyse Rückschlüsse auf die Dehydration, das Säure-Basen-Gleichgewicht, die Darmfäulnis und den Status des Immunsystems des betreffenden Menschen gezogen werden können. Hierbei wird die Dehydration aus der Leitfähigkeit des untersuchten Morgenurins, die Darmfäulnis durch ein Titrations- und Ausfällverfahren mit geeichter Farbskala und der Status des Immunsystems durch das Redoxpotential ermittelt. Für das Säure-Basen-Gleichgewicht wird über zwei Tage 5 mal pro Tag der pH-Wert sowie der pH-Wert des Morgenurins am dritten Tag ermittelt.

Dabei zeigt die Leitfähigkeit, ob ein Körper dehydriert ist, also einen Wassermangel aufweist. Über die Leitfähigkeit des Urins kann darauf geschlossen werden, ob der Patient genügend freies Wasser trinkt. Unter freiem Wasser wird Leitungswasser ohne Kohlensäure verstanden. Es ist bekannt, dass ohne ausreichendes Wasser lebenswichtige Körperfunktionen nicht optimal ablaufen können und dadurch Abfallstoffe nicht ausreichend aus dem Körper transportiert werden können. Eine Regulierung des Säure-Basen-Haushalts ist auch nur dann möglich, wenn keine Dehydration mehr vorliegt.

Mit der pH-Wert-Bestimmung im Urin wird festgestellt, ob der Körper im extra zellulären Bereich oder auch im intrazellulären Bereich übersäuert ist. Bei einer Übersäuerung des Körpers werden die mineralischen Reserven des Körpers verbraucht und bewirken dadurch bekanntlich eine Vielzahl von körperlichen Beschwerden. Je nach Ablauf der Untersuchungen kann sich ergeben, dass entweder nur eine Gewebsübersäuerung, möglicherweise auch eine intrazelluläre Azidose (Beeinträchtigung der Pufferkapazität im Blut), eine latente Übersäuerung mit Neigung zur Gewebsübersäuerung oder eine Alkalose bzw. eine versteckte intrazelluläre Azidose vorliegt.

Je mehr Fäulnis bei der menschlichen Verdauung produziert wird, desto mehr Giftstoffe entstehen und können in den Blutkreislauf gelangen. Da Darmfäulnis durch Milieuveränderung im Darm, einhergehend mit der verstärkten Aktivität von Fäulnisbakterien, die Bor-, Phosphor-, und Schwefelwasserstoffverbindungen produzieren, entsteht, können diese toxischen Verbindungen leicht von der Darmwand absorbiert werden und gelangen dann in die Blutbahn und den Urin. Deshalb kann die Darmfäulnis über den Urin bestimmt werden. Die durch die Darmfäulnis entstandenen toxischen Stoffwechselprodukte werden auch vom Blut absorbiert, so dass neben der toxischen Belastung auch die Fließfähigkeit des Blutes und somit das Herz in Mitleidenschaft gezogen wird. Die Folgen auf Dauer sind, dass alle Organe, Muskeln und Zellen schleichend mit toxischen Stoffen belastet werden, da das Blut die Sauerstoffversorgung des Körpers, bedingt durch die Zähigkeit des Blutes nicht mehr optimal aufrechterhalten kann. Die Folge ist ein zunehmender Sauerstoffmangel im gesamten Körper.

Das Redoxpotential gibt Aufschluss über den Elektronenfluss bei der Ausscheidung. Jeder lebende Organismus ist dem Wechselspiel zwischen Oxidation und Reduktion ausgesetzt. Das bedeutet, dass eine Oxidation gleichzeitig eine Reduktion zur Folge hat und umgekehrt. Dieses Wechselspiel kann mittels des Redoxpotentiales oder Redoxwertes (mV) festgestellt werden, wobei diese Wert im direkten Zusammenhang mit dem Zustand des Immunsystems steht und den Milieustatus anzeigt. Je weiter dieser Wert von den Werten eines gesunden Menschen (ca. +50 bis + 100 mV) abweicht, desto akuter ist die Krankheit und das Körpermilieu gestört, also aus dem Gleichgewicht.

Aufgrund dieser Untersuchungen können somit verlässliche Aussagen über den augenblicklichen Zustand (ist-Zustand) des jeweiligen körperlichen Zustandes gemacht werden und darauf aufbauend schrittweise Empfehlungen für die eigenverantwortliche Verbesserung des körperlicher Zustandes individuell beginnend mit der Dehydration gegeben werden.

Es sind tragbare Getränkeautomaten für den Privathaushalt oder Gewerbe- und Dienstleistungsunternehmen bekannt, die ein aufbereitetes Trinkwasser zum Abfüllen in einem Trinkgefäß bereitstellen, wobei diese Vorrichtungen ein Gehäuse zur Aufnahme einer Wasseraufbereitungseinrichtung, einer Bedieneinheit, einer Steuereinheit und einer Trinkwasserausgabe aufweisen. Es sind elektrolytische Wasseraufbereitungsgeräte zur Wasseraufbereitung von Leitungswasser bekannt, die mittels einer Elektrolysekammer ionisiertes basisches oder ionisiertes saures Wasser erzeugen. Dieses Wasser wird bei Übersäuerung empfohlen, wobei hierbei lediglich Wert auf den hohen pH-Wert, der über 8 liegt, Wert gelegt wird.

### Aufgabe der Erfindung

Der vorliegenden Erfindung liegt daher die Aufgabe zugrunde, eine Vorrichtung und ein Verfahren zur Herstellung von aufbereitetem Trinkwasser vorzuschlagen, mit denen die einzelnen Störungszustände in der Grundprävention des menschlichen Körpers beseitigt werden können.

### Gegenstand der Erfindung

Diese Aufgabe wird erfindungsgemäß durch eine Vorrichtung und ein Verfahren gemäß den nebengeordneten Ansprüchen gelöst. Weitere vorteilhafte Ausgestaltungen sind den jeweiligen rückbezogenen Untenansprüchen zu entnehmen.

Gemäß der Erfindung weist die Wasseraufbereitungseinrichtung eine Elektrolyseeinheit auf, die unter Druck zugeführtes Wasser in Anionen und Kationen trennt und ein saures und ein basisches Wasser erzeugt. Die Steuereinheit gibt dabei die Trinkwasserausgabe des basischen Wassers erst nach einer Aufbauzeit von mindestens 20 Sekunden für den Benutzer frei. Diese Freigabe kann einfach akustisch oder durch ein Ventil erfolgen, geschieht jedoch bevorzugt über eine Sprachausgabeeinheit, die dem Benutzer die Bedingung des Gerätes, die Anwendung der Zusatzstoff sowie Service-Störungsmittteilungen mitteilt, sowie pro Trinkbecher ein Motivationssatz ausgegeben wird. Nach dieser Aufbauzeit liegt für den Benutzer ein reduziertes ionisiertes Trinkwasser vor, welches in seinem Redoxpotential gegenüber dem Ausgangswasser erheblich vermindert ist. Üblicherweise weist dieses reduzierte ionisierte basische Wasser ein Redoxpotential von weniger als -50 mV auf. Dieses Trinkwasser ist somit ein starkes Antioxidant, das in der Lage ist, die freien Radikale zu reduzieren und die vorstehend erwähnten möglicherweise sehr großes Ungleichgewicht im Oxidations-Redoxpotentiale bei einem kranken Menschen zu verringern.

Gemäß einer weiteren Ausbildung der Erfindung umfasst die Wässeraufbereitungseinheit eine Sauerstoffanreicherungseinheit, die mit der Elektrolyseeinheit verbunden werden kann und dieser mit Sauerstoff angereichertes Wasser zuführt.

Die Sauerstoffanreicherungseinheit kann als eine Einheit zum Zuführen von stabilisiertem Sauerstoff in flüssiger Form und/oder als eine Einheit zum Einbringen von gasförmigem Sauerstoff ausgebildet sein. Das Einbringen von stabilisiertem Sauerstoff in flüssiger Form erfolgt, wie nachfolgend auch mit anderen Zusätzen diskutiert, durch geregeltes absaugen aus einem Behälter. Der stabilisierte Sauerstoffeintrag beträgt ca. 630 mg/Liter. Der Sauerstoffgehalt des gasförmig angereicherten fertigen Getränks in % oder mg hängen von der Temperatur ab.

Vorzugsweise wird in der Sauerstoffanreicherungseinheit der gasförmige Sauerstoff drucklos in einer Anreicherungskammer an die Wassermoleküle angelagert, so dass das Ursprungswasser mit einem Sauerstoffgehalt von üblicherweise 90-100 % je nach Temperatur danach einen Sauerstoffgehalt von 350 % bis 600-700 % (entspricht ca. 60 mg/Liter) aufweist. Die Erzeugung des mit Sauerstoff angereicherten Wassers erfolgt derart, dass das Wasser in Längsrichtung durch Hohlfasern mit Mikroporen geführt wird und der Sauerstoff diese Hohlfasern mit stehendem Wasser umgibt und durch diese Poren quer zur Strömungsrichtung drucklos oder nahezu drucklos gelangt. Die Anreicherungskammer weist ein größeres Volumen auf, als beim Abfüllvorgang benötigt wird. Durch die drucklose Anreicherung ist die Verflüchtigung des Sauerstoffs wesentlich geringer als bei anderen bekannten Verfahren. Somit ist der Sauerstoff in dem Sauerstoffwasser länger verfügbar und nicht im Körper aggressiv, weil sich keine freien Radikale bilden. Das mit Sauerstoff angereicherte Wasser kann aber muß nicht der vorstehend erwähnten Elektrolyse unterzogen werden, was bewirken kann, dass daraus ein ionisiertes reduziertes Sauerstoffwasser entsteht, das gleichzeitig ein Oxidant und ein Antioxidant ist. Das auf diese Art und Weise erzeugte Trinkwasser unterstützt den Körper bei der Oxidation und Reduktion. Durch ein Trinkwasser werden somit dem Körper zwei Komponenten zugeführt, die den Gleichgewichtszustand im Körper des Menschen positiv beeinflussen.

Beide Arten der Sauerstoffanreicherung können alternativ oder gleichzeitig mit und ohne Ionisation eingesetzt werden.

Die erfindungsgemäße Vorrichtung kann so aufgebaut sein, dass sie entweder in der Lage ist, eine Art von Trinkwasser oder mehrere Arten von Trinkwässern zu erzeugen.

Gemäß einer weiteren Ausbildung der Vorrichtung kann die Wasseraufbereitungseinrichtung Einrichtungen zum Zuführen von flüssigen Zusatzmitteln zu den freigegebenen Trinkwässern aufweisen. Vorteilhafterweise umfassen die Einrichtungen zum Zuführen von flüssigen Zusatzmitteln eine Einrichtung zum Zuführen einer probiotischen Flüssigkeit und/oder von flüssigen Mineralien und/oder von flüssigen essentiellen Spurenelementen. Diese werden gemäß dem Verfahren in den Flüssigkeitsstrom zu den das Trinkwasser aufnehmenden Gefäß eingespritzt. Das Einspritzen kann mit verschiedenen Einrichtungen, vorzugsweise mittels einer Schlauchpumpe erfolgen.

Für die Reinigung und Hygienisierung der Elektrolyseeinheit ist eine Einrichtung für die Einbringung eines Reinigungsmittels vorgesehen. Als Reinigungsmittel wird vorzugsweise 30%ige Zitronensäure verwendet, um einer Verkalkung der Einheit vorzubeugen.

Durch die Zugabe einer probiotischen Flüssigkeit, insbesondere einer probiotischen Flüssigkeit die unter dem Namen Darmfit^{™} im Handel ist, wird das Potential der Hydroxidionen (OH⁻) und das Redoxpotential des reduzierten ionisierten basischen Wassers erhöht. Obwohl die probiotische Flüssigkeit ein indirektes Antioxidant ist und seine antioxidierenden Eigenschaften erst im Körper entfaltet, und selbst ein Redoxpotential größer 0 mV aufweist, wurde überraschenderweise festgestellt, dass durch die Zugabe dieser probiotischen Flüssigkeit die elektrochemischen Eigenschaften des damit hergestellten Trinkwassers verbessert und damit die biologische Wirkung weiter erhöht wird. Die Veränderung des OH⁻-Potentials bzw. des Redoxpotentials hat bekanntlich in Verbindung mit dem pH-Wert des Trinkwassers einen starken Einfluss auf den Stoffwechsel, die Darmreinigung und -sanierung und bei der Erreichung der Gleichgewichtslage der Stoffwechselprozesse im Hinblick auf das Säure-Basen- und Oxidation-Reduktion-Gleichgewicht. Der pH-Wert des reduzierten ionisierten basischen Wasser liegt im Bereich von 8 bis über 9. Dieser Wert wird auch nach dem Zusatz der probiotischen Flüssigkeit erreicht.

Durch die Zugabe von flüssigen Mineralien oder von flüssigen Spurenelementen wird ein aufbereitetes Trinkwasser bereitgestellt, bei dem das Redoxpotential des reduzierten ionisierten basischen Wassers stabilisiert und die Pufferkapazität um ein Vielfaches (über 100fach) erhöht ist. Zusätzlich werden im einen Fall Mineralstoffe und im anderen Fall Spurenelemente für die Stöffwechselvorgänge im menschlichen Körper bereitgestellt. Für die Zugabe von flüssigen Mineralien hat sich insbesondere das unter der Marke OSIBA vertriebene Basenkolloid (OSIBA Basenkonzentrat) bzw. OSIBA Spurenelementkonzentration mit flüssigen essentiellen Spurenelementen wie Selen, Schwefel, Bor, Mangan, Eisen, Jod, Chrom, Kupfer usw. bewährt. Aufgrund der Zugabe der einen oder der anderen Flüssigkeit wurde anhand von Pufferkapazietätsbestimmungen überraschenderweise festgestellt, dass der pH-Wert eines derartigen Trinkwasser gegenüber dem reduzierten ionisierten basischen Wasser aus der Elektrolysekammer bei der Zugabe einer sauren Flüssigkeit (pH-Wert 3,5) in gleichem zeitlichen Abstand nahezu konstant (pH-Wert ca. 8,6) blieb, während der pH-Wert des reduzierten ionisierten basischen Wassers (pH-Wert 5,5) extrem abgenommen hat.

### Beschreibung der Zeichnungen

Nachfolgend wird die Erfindung anhand eines Ausführungsbeispiels in Verbindung mit den begleitenden Zeichnungen näher erläutert, wobei die Erfindung nicht auf die in den Ausführungsbeispielen gewählten Kombinationen beschränkt ist sondern auch als einzelne Merkmale für sich realisiert werden können. Es stellen dar:
- Figur 1: die Seitenansicht bei geöffneter Seitenwand einer ersten Vorrichtung mit der schematischen Darstellung der einzelnen Komponenten;
- Figur 2: das Schaltungsblockschaltbild für eine Vorrichtung gemäß Figur 1;
- Figur 3: eine Seitenansicht gemäß Figur 1 eines anderen Ausführungsbeispiels;
- Figur 4: das Schaltungsblockschaltbild für eine Vorrichtung gemäß Figur 3.

### Beschreibung eines bevorzugten Ausführungsbeispiels

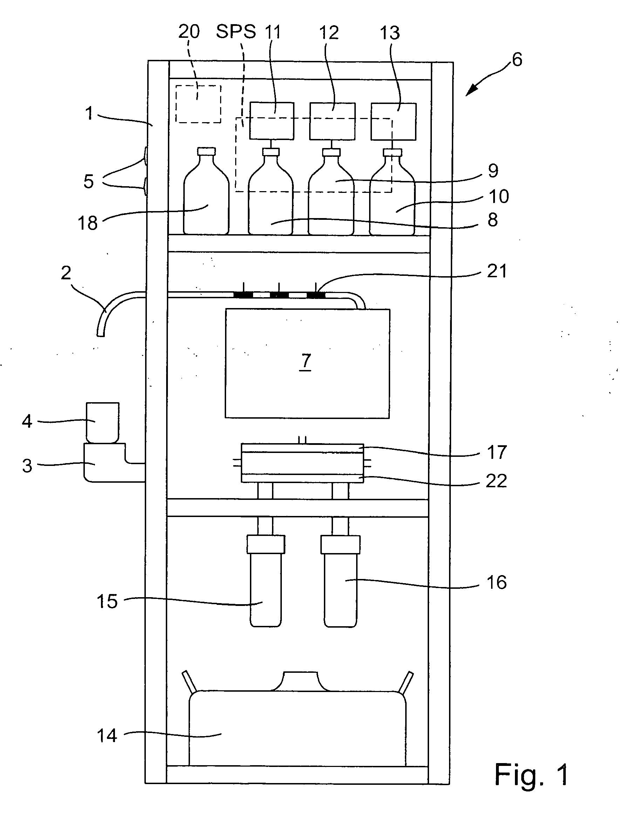

Auf der in der Figur 1 dargestellten Vorderseite 1 befindet sich ein Trinkwasserauslauf 2 und eine darunter angeordnete Trinkgefäßaufnahme 3 mit beispielhaft einem Becher 4. Oberhalb des Trinkwasserauslaufes 2 befinden sich in dieser Figur nur teilweise sichtbar Tasten (zusammenfassend mit 5 bezeichnet) 5a bis 5e für die Inbetriebnahme (5a) und die Ausgabe des reduzierten ionisierten basischen Wassers allein ohne Zusatz sowie die Auswahl für vier verschiedene weitere Trinkwässer mit Zusätzen (Sauerstoffwasser (5e), Wasser mit probiotischer Flüssigkeit (5b), Wasser mit flüssigen Mineralien (5c), Wasser mit flüssigen Spurenelementen (5d)).

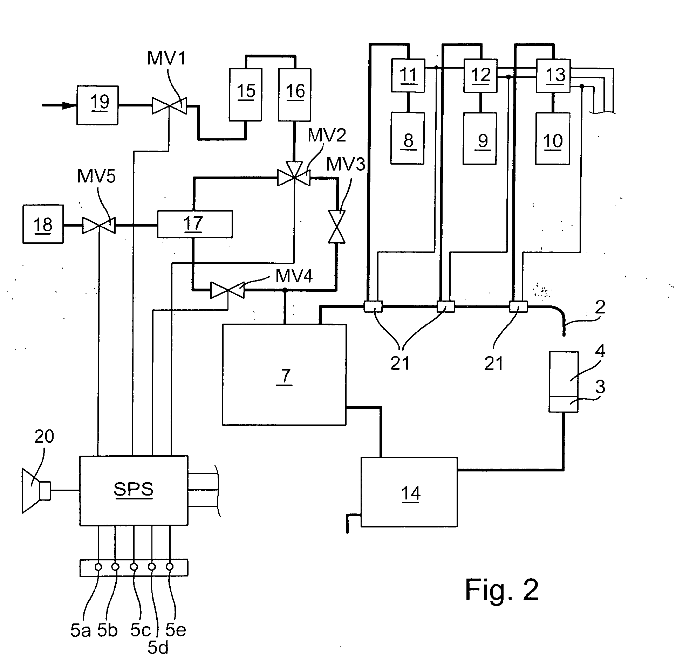

Figur 1 zeigt weiter in schematischer Darstellung die Anordnung der einzelnen Komponenten in dem Gehäuse 6 der Vorrichtung, wobei die Verbindungsleitungen und Schalteinrichtungen sowie Ventile, die in Verbindung mit der Figur 2 beschrieben werden, aus Gründen der Übersichtlichkeit nicht gezeigt sind. Das Gehäuse 6 weist einen Tragrahmen 7 auf, an dem an zentraler Stelle eine Elektrolyseeinheit 7 angeordnet ist, die ein reduziertes ionisiertes basisches Wasser mit einem pH-Wert im Bereich von 8 bis über 9 (abhängig vom Ausgangswasser) erzeugt. Oberhalb der Elektrolyseeinheit 7 befinden sich drei Behältnisse 8, 9, 10, die die probiotische Flüssigkeit, die flüssigen Mineralien bzw. die flüssigen Spurenelemente enthalten. Die Flüssigkeiten werden mittels entsprechenden Schlauchpumpen 11, 12, 13 dem aus der Elektrolyseeinheit 7 austretenden reduzierten ionisierten basischem Wasser über Rückschlagventile oder Minimagnetventile 21 zugeführt. Das aus der Elektrolyseeinheit 7 austretende saure Abfallwasser sowie das auf die Trinkgefäßaufnahme 3 gelangende Wasser werden in einem Abwasserbehälter 14 aufgefangen und mittels einer nicht dargestellten Tauchpumpe mit Schwimmerschalter abgeführt.

Unterhalb der Elektrolyseeinheit 7 befindet sich der Wassereingang mit zwei hintereinander geschalteten Kerzenfiltern durch die das abgezapfte Leitungswasser gereinigt wird. Die erste Filterkerze 15 ist mit einem Kohleaktivfilter und einem Mikrofilter versehen, während die zweite Filterkerze 16 Elemente zur Information des Wassers aufweist. In diesem Bereich befindet sich außerdem eine Sauerstoffanreicherungseinrichtung 17, die den medizinischen Sauerstoff aus einer oberhalb der Elektrolyseeinheit 7 angeordneten Sauerstoffflasche 18 bezieht. Grundsätzlich kann auch statt dessen ein Sauerstoffkonzentrator verwendet werden. Die Sauerstoffanreicherungseinrichtung 17 weist eine Anreicherungskammer 22 mit in Längsrichtung angeordnete Hohlfasern aufweist, durch die das Wasser fließt und anschließend aus der Anreicherungskammer 17 austritt (beschrieben beispielsweise in EP 1 481 720), und quer zur Fließrichtung des Wassers an die Anreicherungskammer 17 die Sauerstoffflasche 18 angeschlossen ist, so dass das Gas durch die Hohlfaserwände in das darin befindliche Wasser gelangt. Alle Gebrauchsstoffe sind in diesem oberen Bereich einfach für die Auswechslung zugänglich.

In dem Gehäuse 6 befindet sich außerdem eine gestrichelt dargestellte hinter einer Wand befindliche programmierbare Steuereinrichtung (SPS) zur Steuerung der einzelnen Einheiten für die Ausgabe des angereicherten Wassers. Die Steuereinrichtung umfasst auch ein Sprachmodul. Die Dosierung der einzelnen Flüssigkeiten erfolgt über eine Zeitsteuerung. Ebenfalls gestrichelt dargestellt ist hinter einer Wand ein Lautsprecher 20 als Sprachausgabe für Anweisungen an den Benutzer angeordnet.

Figur 2 zeigt schematisch das Blockschaltbild an dem nachfolgend das Zusammenwirken der einzelnen Komponenten erläutert wird. Die wasserführenden Leitungen sind dicker dargestellt als die elektrischen Leitungen.

Das ankommende Leitungswasser gelangt zu einem Druckminderer 19 über den der Arbeitsdruck für das gesamte System auf 1 l/min eingestellt wird. Im Anschluss daran befindet sich das Magnetventil MV1 das mit der Steuereinrichtung SPS verbunden ist. Diese Steuereinrichtung SPS ist mit weiteren Magnetventilen MV2, MV4 und MV5, dem Lautsprecher 20 als Sprachausgabe und den jeweiligen Wahltasten 5a bis 5e, schematisch als ein Block dargestellt, verbunden. Nach dem Magnetventil MV1 befinden sich in Reihe geschaltet die Filterkerzen 15 und 16 sowie das Magnetventil MV2 als 2x2-Wegeventil. Dieses Magnetventil verschließt im Normalzustand den Weg zu der Sauerstoffanreicherungseinheit 17, so dass normalerweise das Wasser über den Zweig mit einem darauffolgenden Magnetventil MV3 zu der Elektrolyseeinheit 7 gelangt. Ausgangsseitig ist die Sauerstoffanreicherungseinrichtung 17 über das Magnetventil MV4 ebenfalls mit der Elektrolyseeinheit 7 verbunden. Zwischen der Sauerstoffflasche 18 und der Sauerstoffanreichungseinheit 17 befindet sich das Magnetventil MV5, das genauso wie die Magnetventile MV2 und MV4 mit der Steuerung SPS verbunden sind. Durch die Anordnung und Ansteuerung der Magnetventile MV2, MV4 und MV5 wird Sauerstoff entsprechend dem Flaschendruck aus der Sauerstoffflasche 18 in diesen Bereich eingeführt, gleichzeitig aber das darin befindliche Wasser entsprechend der Zeitsteuerung für beispielsweise ein Bechervolumen von 400 ml der Elektrolyseeinheit 7 zuführt. Nach Ablauf der Zeit werden die Ventile wieder geschlossen. Der während der Fließzeit in diesen Bereich eingebrachte Sauerstoff bleibt erhalten und umgibt in der Anreicherungskammer die Hohlfasern. In dieser Sauerstoffatmosphäre wird das Wasser, das auch bei Stillstand in den die Hohlfasern umgebenden Bereich gelangt, mit dem Sauerstoff angereichert. Das Magnetventil MV3 dient lediglich der Druckreduzierung, um den Widerstand an den über die Sauerstoffanreichungseinheit 17 verlaufenden Weg anzupassen. Die Elektrolyseeinheit 17 ist über den Ausgang 28 für das saure Wasser mit einem Abwasserbehälter 14 verbunden, der ausgangsseitig das Wasser einem geeigneten Ablauf zuführt. Dies erfolgt beispielsweise mittels einer nicht dargestellten Tauchpumpe mit Schwimmerschalter und einem Abwasserschlauch, der in das Abflussrohr im Haus führt. Die Steuereinrichtung SPS ist außerdem mit den Schlauchpumpen 11, 12, 13 verbunden, die aus den jeweiligen Behältern 8 für das probiotische Getränk, 9 für die flüssigen Mineralien und 10 für die flüssigen Spurenelemente bei Bedarf zeitgesteuert über einen vorgegebenen Zeitraum die Flüssigkeit abpumpen und in das aus der Elektrolyseeinheit 7 über den Ausgang 29 austretende reduzierte ionisierte Wasser über Magnetventile 21 zugeben, so dass das angereicherte Wasser über den Trinkwasserauslauf 2 austreten kann. Die Füllmenge der Behälter 8, 9, 10 und der Sauerstoffflasche 18 wird (nicht dargestellt) erfasst und angezeigt. Die in dem Ausführungsbeispiel angegebenen Komponenten können selbstverständlich durch andere geeignete ersetzt werden.

Wie bereits erwähnt erfolgt die Dosierung der Flüssigkeitsmengen zeitgesteuert. Durch den Druckminderer 19 wird die Durchflussmenge auf 1 l/min festgelegt und aufgrund dieser Information die Zeitsteuerung durchgeführt. Nach Betätigung der Wahltasten 5a,5b,5c,5d,5e wird das Magnetventil MV1 (2x2 Wege) geöffnet, so dass das Wasser direkt zu der Elektrolyseeinheit 7 gelangt. Diese ist an das Stromnetz angeschlossen und schaltet sich bei Anlegen eines Wasserdruckes automatisch ein. Nach einem Spülvorgang zur Reinigung der Elektroden schaltet die Elektrolyseeinheit automatisch auf die Erzeugung von basischem Wasser. Das während dieser Zeit erzeugte Wasser fließt vor der über die Trinkgefässaufnahme 3 in den Abwasserbehälter 14. Nach einer Aufbauzeit von mindestens 20 Sekunden wird der Benutzer während eines kurzen Wasserstops aufgefordert, nun sein Trinkgefäß 4 auf die Trinkgefäßaufnahme 3 zu stellen und gegebenenfalls ein Zusatzmittel auszuwählen. Anschließend wird das Trinkgefäß gefüllt. Wünscht der Benutzer Zusatzmittel, so betätigt er die entsprechenden Taster 5b bis 5d. Je nach Wahl wird die erforderliche Schlauchpumpe 11, 12 oder 13 durch die Steuereinrichtung SPS betätigt. Wünscht der Benutzer Sauerstoffwasser, so löst die Betätigung des entsprechenden Tasters (hier beispielsweise 5e) das Öffnen der Magnetventile MV4 und MV 5 und das Umschalten des Magnetventils MV2 aus.

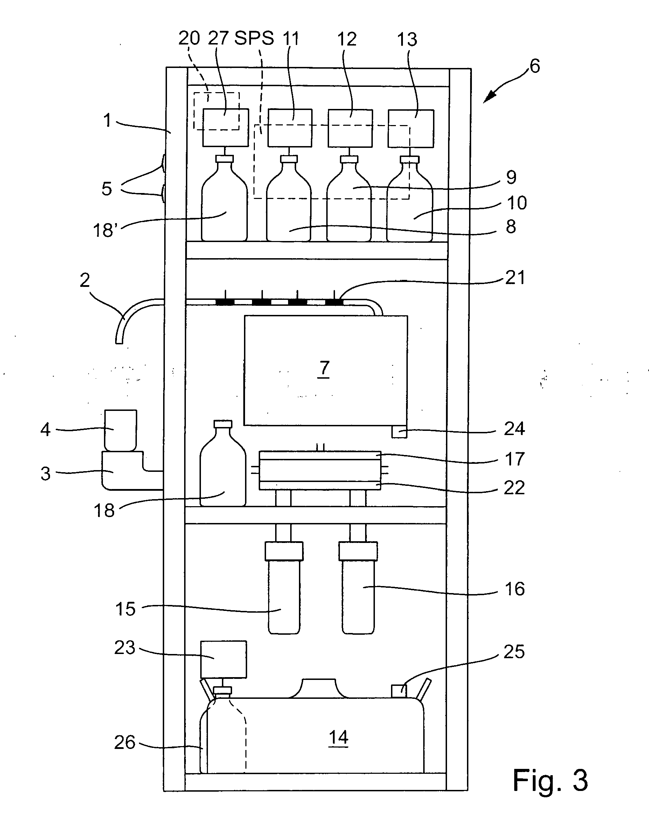

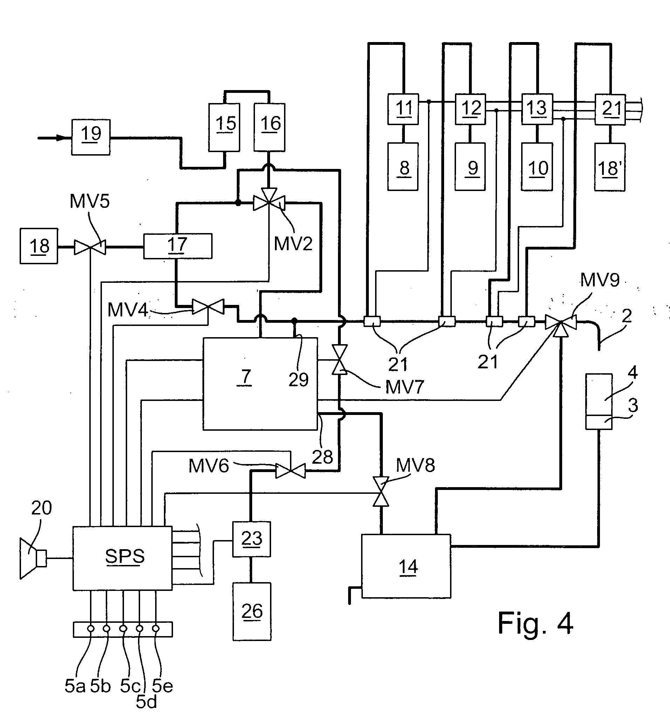

In der in den Figuren 3 und 4 dargestellten Ausführungsform sind die den Figuren 1 und 2 entsprechenden gleichen Teile mit gleichen Bezugszeichen versehen. Entsprechend sind auch in der schematischen Darstellung in Figur 3 entsprechend Figur 1 keine Verbindungsleitungen, Schalteinrichtungen und Ventile, die in Verbindung mit der Figur 4 beschrieben werden, dargestellt.

In der Figur 3 ist zusätzlich ein Behälter 18' vorgesehen, in dem sich stabilisierter Sauerstoff befindet, der mittels einer Tauchpumpe 27 entsprechend den anderen Zugabestoffen dosiert werden kann. Des Weiteren ist ein Behälter 26 mit 30%iger Zitronensäure, die mittels einer entsprechenden Schlauchpumpe 23 und durch die Steuereinrichtung SPS (Figur 4) nach einer gewissen Anzahl von Füllungen zur Reinigung in die Elektrolyseeinheit geleitet wird. Die erlaubte Anzahl der Füllungen ist abhängig von der Qualität des Eingangswassers. In der Figur 3 ist mit der Nummer 24 ein Anschluss für saures Wasser und mit der Nummer 25 der entsprechende Anschluss an den Abwasserbehälter 14 bezeichnet. Der Behälter 18' für stabilisierten Sauerstoff befindet sich neben den anderen Behältern 19 und 11 für die zu dosierenden Flüssigkeiten. Die Gasflasche 18 mit dem gasförmigen Sauerstoff ist in diesem Ausführungsbeispiel in der Nähe der Elektrolyseeinheit 7 angeordnet.

Figur 4 zeigt das Blockschaltbild mit den dicker dargestellten wasserführenden Leitungen und den dünner dargestellten elektrischen Leitungen. Das ankommende Leitungswasser gelangt zu einem Druckminderer 19 über den der Arbeitsdruck für das gesamte System auf ein Liter pro Minute eingestellt wird. Im Anschluss daran befinden sich in Reihe geschaltet die Filterkerzen 15 und 16. Das derart gefilterte Wasser gelangt zu dem 3x2-Wegeventil MV2. Bei allen in den Ausführungsbeispielen dargestellten elektrischen Ventilen handelt es sich um Magnetventile. Sämtliche Ventile werden mittels der Steuereinrichtung SPS elektrisch angesteuert. Entsprechend der Auswahl über die Tastatur 5a bis 5f werden die Magnetventile über die Steuereinrichtung SPS betätigt. Nach dem Ventil MV2 gelangt das Wasser zu der Sauerstoffanreicherung. Diese kann, im Zusammenhang mit dem in Figur 2 dargestellten Ausführungsbeispiel mittels gasförmigem Sauerstoff aus der Sauerstoffflasche 18 in der Anreicherungskammer 17 erfolgen. Hierzu werden die Magnetventile MV4 und oder MV7 entsprechend betätigt, so dass das Wasser durch diesen Zweig fließen kann. Sobald die vorgegebene Menge durchgeflossen ist, wird zuerst das Ventil MV4 geschlossen und nach einer gewissen Zeit das Ventil MV5, so dass der Sauerstoff in der Anreicherungskammer 17 drucklos in das Wasser diffundieren kann. Parallel dazu kann mittels eines Minimagnetventils 21 über die Tauchpumpe 27 flüssiger Sauerstoff aus dem Behälter 18' in das Wasser eingebracht werden. Wie aus der Zeichnung ersichtlich, können beide Sauerstoffarten oder nur eine zugeführt werden. Das mit Sauerstoff angereicherte Wasser gelangt über das 3x2-Wegeventil MV9, das stromlos geschlossen ist, zu dem Behälter 4. Der andere Zweig des Ventils MV2 führt zu dem Eingang der Elektrolysekammer 7, die basisches Wasser, das die Elektrolysekammer 7 über den Ausgang 29 und saures Wasser, das die Elektrolysekammer über den Ausgang 28 verlässt. Das saure Wasser gelangt über das MV8, das stromlos offen ist, in den Abwasserbehälter 14. Das über den Ausgang 29 der Elektrolyseeinheit 7 austretende reduziert ionisierte Wasser kann nachfolgend, wie im Zusammenhang mit Figur 2 beschrieben, mit den in den Behältern 8, 9, 10 angeordneten Flüssigkeiten nach Öffnung des Ventils MV9 über den Trinkwasserauslauf 2 ausgegeben werden. Das 3x2-Wegeventil MV9 verbindet die zu dem Trinkwasserauslauf 2 führende Leitung mit dem Abwasserbehälter 14, um das während der Aufbauzeit von mindestens 20 Sekunden anfallende Wasser abzuleiten.

Gegenüber dem Ausführungsbeispiel gemäß Figur 2 ist in dem Ausführungsbeispiel gemäß Figur 4 eine zusätzliche Reinigungseinrichtung vorgesehen, die insbesondere dazu dient, einer Verkalkung und Hygienisierung der Elektrolyseeinheit 7 entgegenzuwirken. Hierzu befindet sich in einem Behälter 26 30%ige Zitronensäurekonzentrat, die mittels einer Schlauchpumpe 23 zusammen mit gefiltertem Wasser in den Ausgang 28 der Elektrolyseeinheit 7 eingebracht wird. Hierzu werden die beiden Magnetventile MV6 und MV7 entsprechend geöffnet und das Magnetventil MV8 geschlossen. Nach der Einbringung einer vorgegebenen Menge von Zitronensäurekonzentrat + Wasser in die Elektrolyseeinheit 7 wird der Vorgang beendet. Das Einbringen der Zitronensäurelösung erfolgt automatisch nach einer gewissen Anzahl von Füllungen oder nach einer vorgegebenen Zeit und möglichst in der Nacht damit die Zitronensäurelösung einwirken kann. Nach Ablauf einer vorgegebenen Zeit wird die Elektrolyseeinheit 7 über das Magnetventil MV7 und bei noch geschlossenem Magnetventil MV8 für eine bestimmte Zeit gespült. Danach wird auch das Magnetventil MV8 wieder geöffnet. Während der Entkalkung werden von der Steuereinrichtung SPS sämtliche anderen Funktionen einschließlich der Elektrolyseeinheit deaktiviert.

Wie bereits im Zusammenhang mit dem Ausführungsbeispiel gemäß Figur 2 beschrieben, erfolgt die Steuerung der Flüssigkeitsmengen und damit die Öffnung bzw. Schließung der jeweiligen Ventile zeitgesteuert. Die Funktionsweisen der Ausführungsbeispiele sind mit Ausnahme der diskutierten Unterschiede gleich.

Mittels der erfindungsgemäßen Vorrichtung und dem Verfahren ist somit die Bereitstellung von fünf verschiedenen aufbereiteten Trinkwässer auf einfache Art und Weise möglich. Selbstverständlich kann auch die Aufbereitung für jedes Trinkwasser mittels einer gesonderten Einrichtung erfolgen, wobei dies jedoch im Hinblick auf die Elektrolyseeinheit nur in besonderen Anwendungsfällen als zweckmäßig erscheint. Wesentlich wirtschaftlicher ist, wie bei diesem Ausführungsbeispiel dargestellt, die Mehrfachnutzung der handelsüblichen Elektrolyseeinheit 7 für verschiedene angereicherte Getränke mit besonderen elektrochemischen Eigenschaften, die sich gesundend auf den Körper des Menschen auswirken können.

## Patentansprüche

1. Vorrichtung zur Bereitstellung mindestens eines aufbereiteten Trinkwassers zum Abfüllen in einem Gefäß mit einem Gehäuse (6) zur Aufnahme einer Wasseraufbereitungseinrichtung (7, 8, 9, 10, 17) einer Bedieneinheit (5), einer Steuereinheit (SPS) und einer Trinkwasserausgabe, **dadurch gekennzeichnet, dass** die Wasseraufbereitungseinrichtung eine Elektrolyseeinheit (7) aufweist, die unter Druck zugeführtes Wasser in Anionen und Kationen trennt und ein saueres und ein basisches Wasser erzeugt, und die Steuereinheit (SPS) die Trinkwasserausgabe des basischen Wassers erst nach einer Aufbauzeit von mindestens 20 Sekunden für den Benutzer freigibt.

2. Vorrichtung nach Anspruch 1, **dadurch gekennzeichnet, dass** die Wasseraufbereitungseinrichtung eine Sauerstoffanreicherungseinheit (17) umfasst, die mit der Elektrolyseeinheit (7) verbunden ist und dieser mit Sauerstoff angereichertes Wasser zuführt.

3. Vorrichtung nach Anspruch 2, **dadurch gekennzeichnet, dass** die Sauerstoffanreicherungseinheit (17) eine Anreicherungskammer aufweist, in der stillstehendes Wasser drucklos von Sauerstoff umgeben ist.

4. Vorrichtung nach Anspruch 1, **dadurch gekennzeichnet, dass** die Wasseraufbereitungseinrichtungen (8, 9, 10) zum Zuführen von flüssigen Zusatzmitteln zu dem freigegebenen Trinkwasser aufweist.

5. Vorrichtung nach Anspruch 4, **dadurch gekennzeichnet, dass** die Einrichtungen zum Zuführen von flüssigen Zusatzmitteln eine Einrichtung (8) zum Zuführen einer probiotischen Flüssigkeit und/oder eine Einrichtung (9) zum Zuführen von flüssigen Mineralien und/oder eine Einrichtung (10) von flüssigen essenziellen Spurenelementen aufweisen.

6. Vorrichtung nach einem der vorangegangenen Ansprüche, **dadurch gekennzeichnet, dass** eine Sprachausgabeeinrichtung (20) vorgesehen ist, über die Anweisungen und Informationen an den Benutzer ausgebbar sind.

7. Vorrichtung nach einem der vorangegangenen Ansprüche, **dadurch gekennzeichnet, dass** eine Reinigungs und Hygienisierungeinrichtung insbesondere für die Elektrolyseeinheit vorgesehen ist.

8. Verfahren zur Trinkwasseraufbereitung unter Verwendung einer Wasseraufbereitungseinrichtung und einer Steuereinheit (SPS) wobei der Wasseraufbereitungseinrichtung Leitungswasser zugeführt und mittels einer Elektrolyseeinheit (7) ein ionisiertes saures oder ionisiertes basisches Wasser erzeugt wird, und das erzeugte basische Wasser von der Steuereinheit (SPS) nach einer Aufbauzeit von mindestens 20 Sekunden zum Abfüllen in ein Gefäß (4) freigegeben wird.

9. Verfahren nach Anspruch 8, **dadurch gekennzeichnet, dass** der Elektrolyseeinheit (7) ein mit Sauerstoff angereichertes Wasser zugeführt wird.

10. Verfahren nach Anspruch 9, **dadurch gekennzeichnet, dass** der Sauerstoff drucklos in das Wasser eingebracht wird.

11. Verfahren nach Anspruch 8, **dadurch gekennzeichnet, dass** dem basischen Wasser eine probiotische Flüssigkeit, flüssige Mineralien oder flüssige Spurenelemente in den Wasserstrom zu dem Gefäß (4) eingespritzt wird.

12. Verfahren nach einem der vorangegangenen Ansprüche 8-11, **dadurch gekennzeichnet, dass** die Elektrolyseeinheit (7) mittels eines Reinigungsmittels, vorzugsweise Zitronensäure, nach einer bestimmten Anzahl von Abfüllvorgängen automatisch gereinigt wird.
